# EUROPÄISCHE PATENTSCHRIFT

(11) **EP 0 624 736 B1**
(45) Veröffentlichungstag und Bekanntmachung des Hinweises auf die Patenterteilung: **18.12.1996**
(21) Anmeldenummer: 94102843.3
(22) Anmeldetag: 25.02.1994
(51) Int. Cl.: F16F 15/12

(54) **Drehschwingungstilger**
Rotary oscillation damper
Amortisseur de vibration de rotation

(30) Priorität: 10.05.1993 DE 4315483
(43) Veröffentlichungstag der Anmeldung: 17.11.1994
(73) Patentinhaber: Firma Carl Freudenberg, D-69469 Weinheim (DE)
(72) Erfinder: Olbrich, Andreas, D-64756 Mossautal (DE)

(56) Entgegenhaltungen:
- EP-A- 0 356 917
- EP-A- 0 408 040
- US-A- 4 223 565

## Beschreibung

Die Erfindung betrifft einen Drehschwingungstilger nach dem Oberbegriff von Anspruch 1.

Es ist ein Drehschwingungstilger aus der eigenen Produktion bekannt, der aus zwei Halbschalen besteht. Diese sind an den am Außenumfang der rotierenden Welle angedrückt und durch in Umfangsrichtung verformbare Federelemente mit zwei kreissegmentartig ausgebildeten Trägheitsmassen verbunden. Bei manchen Fahrzeugen ist es aus Montagegründen notwendig, die Trägheitsmasse zu teilen und die geteilten Massen miteinander zu verbinden. Dies ist dann der Fall, wenn die Welle zu ihrer Befestigung an den beiden Enden größere Verdickungen besitzt, als der Wellendurchmesser an der Stelle, an der der Tilger befestigt werden soll. Die Verbindung der Halbschalen besteht in der Regel aus zwei Stiften oder Schrauben an den Stellen, wo sie einander berühren. Derartige Verbindungen der beiden Halbschalen sind durch die erforderliche Bearbeitungen sehr kostenaufwendig. Unwuchterscheinungen beim Rotieren der Welle treten zusätzlich auf.

Aufgabe der Erfindung ist es, einen kostengünstig herstellbaren Drehschwingungstilger anzugeben, der leicht montierbar ist.

Diese Aufgabe wird erfindungsgemäß durch den kennzeichnenden Teil des Hauptanspruchs sowie durch die Ausgestaltungen nach den Unteransprüchen gelöst.

Bei dem erfindungsgemäßen Drehschwingungstilger ist es vorgesehen, daß die Halteelemente zwischen den beiden Verdickungen befestigt und durch zumindest einen die Trägheitsmassen radial außenseitig umschließenden Ring fixiert sind und daß der Ring einen Innendurchmesser hat, der größer ist, als der Durchmesser zumindest der kleinsten der Verdickungen. Damit entfallen komplizierte mechanische Bearbeitungen der Trägheitsmassen für zusätzliche Stift- oder Schraubverbindungen. Es wird eine einfache Montage der Trägheitsmassen gewährleistet und unnötige Korrosionsgefährdungen durch Schmutzablagerung, wie beispielsweise bei Schraubverbindungen, können vermieden werden. Diese Verbindung ist wesentlich kostengünstiger als herkömmliche Verbindungen und trägt wesentlich zur rotationssymmetrischen Bewegung der Welle bei. Zur Reduzierung von Maßungenauigkeiten kann der Ring weiterhin über einen Gummiüberzug auf die Trägheitsmassen aufgepreßt werden. Um einen breiten Resonanzbereich zu erzielen, können im Bereich der stirnseitigen Enden der Trägheitsmassen mindestens zwei Ringe fixiert sein. Eine weitere Möglichkeit der Lösung besteht darin, daß der die Trägheitsmassen umschließende Ring als weitere Trägheitsmasse ausgebildet ist. Dabei sind diese weitere Trägheitsmasse und die Trägheitsmassen des Drehschwingungstilgers durch eine Zwischenschicht aus Gummi drehelastisch verbunden. Der Vorteil dieser Ausführung besteht in einer zusätzlich verbesserten Schwingungsdämpfung der rotierenden Welle. Für eine einfache Montage sowie eine sichere Verbindung sind Ausgestaltungsformen des Ringes vorgesehen, wie beispielsweise ein rechteckiges Profil des Ringes, daß der Ring auf die Trägheitsmassen aufgeschrumpft ist oder daß der Ring innenseitig durch eine Fläche begrenzt ist, die in axialer Richtung einerseits kufenförmig endet und andererseits mit einer Anschlagbegrenzung versehen ist. Vorteilhaft wirkt sich die Möglichkeit aus, daß der Ring in radialer Richtung auffederbar und an einer Umfangsstelle mit einer Durchtrennung versehen ist. Mit dieser Lösung kann eine Verbindung der Trägheitsmassen realisiert werden, ohne daß der Ring über die Verdickung geschoben werden muß. Bei all diesen Lösungsmöglichkeiten ist es möglich, auch in kritischen Drehzahlbereichen die rotierende Welle rotationssymmetrisch auszubilden und schwingungsarm zu halten.

Im folgenden wird die Erfindung unter Zuhilfenahme der Zeichnungen anhand von Ausführungsbeispielen näher erläutert.

Es zeigen:

Fig. 1 und 2 Schnittdarstellungen des erfindungsgemäßen Drehschwingungstilgers.

Fig. 3 ein Ausführungsbeispiel der Erfindung.

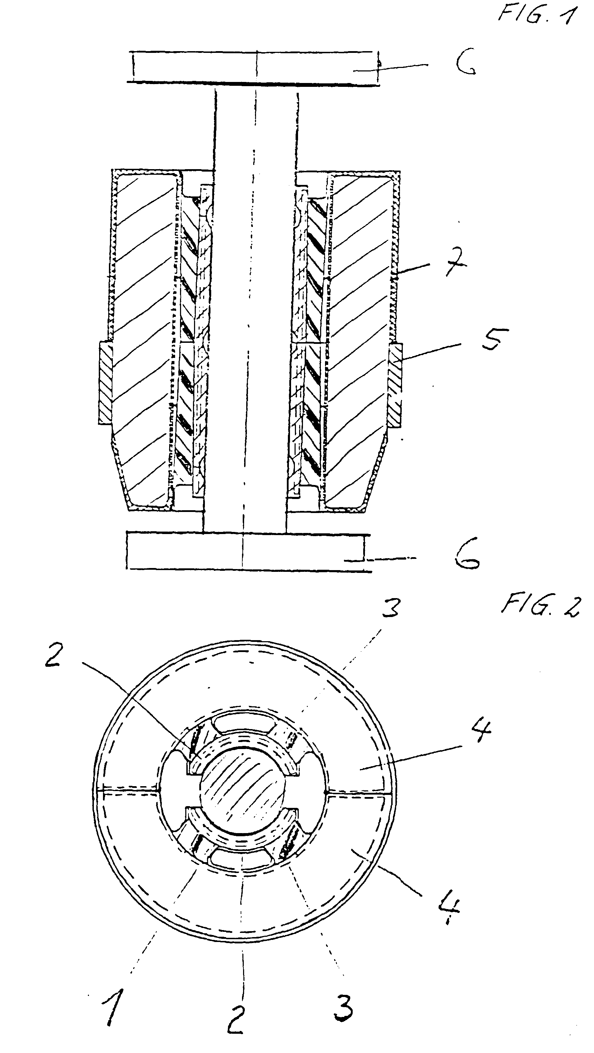

In den Fig. 1 und 2 ist ein Drehschwingungstilger längs- sowie quergeschnitten wiedergegeben. Dieser besteht aus zwei an den Außenumfang einer rotierenden Welle 1 andrückbaren Halbschalen 2, die durch in Umfangsrichtung verformbare Federelemente 3 mit zwei kreissegmentartig ausgebildeten Trägheitsmassen 4 verbunden sind. Diese Trägheitsmassen 4 sind durch Halteelemente verbunden. Erfindungsgemäß sind die Halteelemente durch zumindest einen die Trägheitsmassen 4 umschließenden Ring 5 gebildet. Dabei ist zu beachten, daß der Ring 5 einen Innendurchmesser hat, der größer ist als der Durchmesser zumindest der kleinsten der Verdickungen 6. Die Verdickungen 6 können Lager oder Befestigungen der Welle 1 zu deren Verbindung mit anderen Bauteilen darstellen. Der Ring 5 kann mit Gummi beschichtet sein. Eine weitere Ausführungsform besteht darin, daß die Trägheitsmassen 4 mit einem Gummiüberzug 7 (Fig. 1) versehen sind und der Ring 5 darauf aufgepreßt ist. Eine andere Möglichkeit der Ausführung ist dadurch gekennzeichnet, daß mindestens zwei im Bereich der stirnseitigen Enden der Trägheitsmassen 4 angeordnete Ringe 5 fixiert sind. Der Ring 5 gemäß Fig. 1 kann sowohl eine rechteckige Form aufweisen, als auch innenseitig durch eine kufenförmige Fläche begrenzt sein. Weiterhin kann der Ring 5 aufgeschrumpft oder in radialer Richtung auffederbar und an einer Umfangsstelle mit einer Durchtrennung versehen sein.

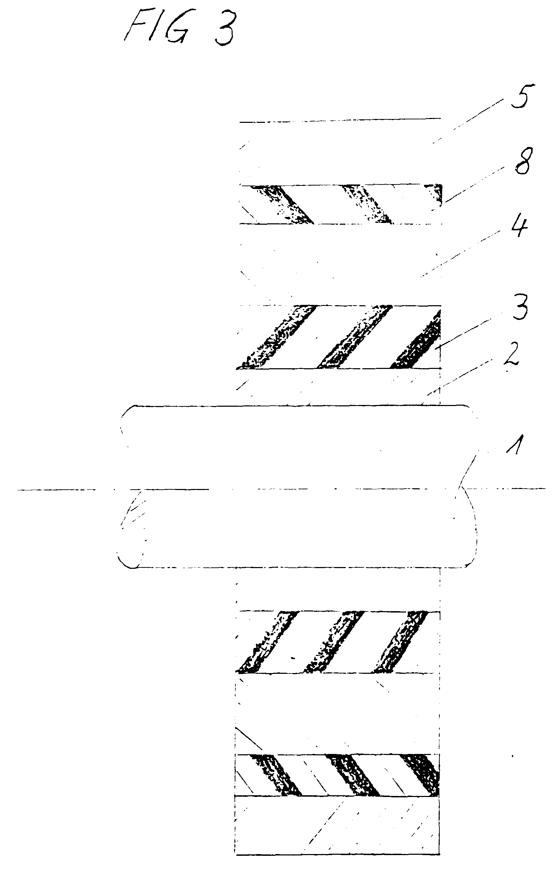

Eine weitere Ausführungsform ist aus der Fig. 3 ersichtlich. Der Ring 5 ist dort als weitere Trägheitsmasse ausgebildet. Diese weitere Trägheitsmasse ist mit den Trägheitsmassen 4 durch eine Zwischenschicht 8 aus Gummi drehelastisch verbunden.

Die wesentlichsten Vorteile der Erfindung bestehen in der einfachen Montage der Trägheitsmassen ohne zusätzliche mechanische Bearbeitung dieser Teile, in der Steigerung des Rotationssymmetriegrades der rotierenden Welle, in den kostengünstigeren Herstellung einer sicheren Verbindung der Trägheitsmassen und damit des gesamten Drehschwingungstilgers, sowie in der Verminderung von dessen Korrosionsgefährdung des Drehschwingungstilgers.

## Patentansprüche

1. Drehschwingungstilger zur Verwendung auf dem Außenumfang einer um eine Achse rotierenden Welle (1), die an ihren beiden Enden Verdickungen (6) aufweist, umfassend an den Außenumfang andrückbare Halbschalen (2), die durch in Umfangsrichtung verformbare Federelemente (3) mit mindestens zwei kreissegmentartig ausgebildeten Trägheitsmassen (4) verbunden sind, wobei die Trägheitsmassen (4) durch Halteelemente miteinander verbunden sind, dadurch gekennzeichnet, daß die Halteelemente zwischen den beiden Verdickungen (6) befestigt und durch zumindest einen die Trägheitsmassen (4) radial außenseitig umschließenden Ring (5) fixiert sind und daß der Ring (5) einen Innendurchmesser hat, der größer ist, als der Außendurchmesser zumindest der kleinsten der Verdickungen (6).

2. Drehschwingungstilger nach Anspruch 1, dadurch gekennzeichnet, daß der Ring (5) mit Gummi beschichtet ist.

3. Drehschwingungstilger nach Anspruch 1, dadurch gekennzeichnet, daß die Trägheitsmassen (4) mit einem Gummiüberzug (7) versehen sind und daß der Ring (5) darauf aufgepreßt ist.

4. Drehschwingungstilger nach Anspruch 1, dadurch gekennzeichnet, daß mindestens zwei im Bereich der stirnseitigen Enden der Trägheitsmassen (4) angeordnete Ringe (5) vorgesehen sind.

5. Drehschwingungstilger nach Anspruch 1, dadurch gekennzeichnet, daß der Ring (5) eine rechteckige Form aufweist.

6. Drehschwingungstilger nach Anspruch 1, dadurch gekennzeichnet, daß der Ring (5) als weitere Trägheitsmasse ausgebildet ist.

7. Drehschwingungstilger nach Anspruch 6, dadurch gekennzeichnet, daß die weitere Trägheitsmasse und die Trägheitsmassen (4) durch eine Zwischenschicht (8) aus Gummi die drehelastisch verbunden sind.

8. Drehschwingungstilger nach Anspruch 1, gekennzeichnet dadurch, daß der Ring (5) innenseitig durch eine in axialer Richtung kufenförmig endende Fläche begrenzt ist.

9. Drehschwingungstilger nach Anspruch 1, dadurch gekennzeichnet, daß der Ring (5) aufgeschrumpft ist.

10. Drehschwingungstilger nach Anspruch 1, gekennzeichnet dadurch, daß der Ring (5) in radialer Richtung auffederbar und in radialer Richtung an einer Umfangsstelle mit einer Durchtrennung versehen ist.

## Claims

1. A torsional vibration damper for use on the outside circumference of a shaft (1) which rotates about an axis and has thickenings (6) at both its ends, comprising semi-shells (2) which can be pressed against the outside circumference and are connected to at least two inertia masses (4) of segment-like design by spring elements (3) which can be deformed in the circumferential direction, the inertia masses (4) being connected to one another by holding elements, characterized in that the holding elements are fastened between the two thickenings (6) and are fixed by at least one ring (5) which surrounds the inertia masses (4) radially on the outer side, and in that the ring (5) has an inside diameter which is greater than the outside diameter at least of the smallest one of the thickenings (6).

2. A torsional vibration damper according to claim 1, characterized in that the ring (5) is coated with rubber.

3. A torsional vibration damper according to claim 1, characterized in that the inertia masses (4) are provided with a rubber coating (7), and in that the ring (5) is pressed onto the latter.

4. A torsional vibration damper according to claim 1, characterized in that at least two rings (5) are provided, which are arranged in the region of the front ends of the inertia masses (4).

5. A torsional vibration damper according to claim 1, characterized in that the ring (5) has a rectangular shape.

6. A torsional vibration damper according to claim 1, characterized in that the ring (5) is designed as a further inertia mass.

7. A torsional vibration damper according to claim 6, characterized in that the further inertia mass and the inertia masses (4) are flexibly connected by an intermediate layer (8) made of rubber.

8. A torsional vibration damper according to claim 1, characterized in that the ring (5) is bounded on the inner side by a surface which ends in a skid-like manner in the axial direction.

9. A torsional vibration damper according to claim 1, characterized in that the ring (5) is shrunk on.

10. A torsional vibration damper according to claim 1, characterized in that the ring (5) can be sprung open in the radial direction and is provided with a separation in the radial direction at a point on the circumference.

## Revendications

1. Amortisseur de vibration de rotation destiné à être utilisé sur la circonférence extérieure d'un arbre (1) tournant autour d'un axe, qui présente à ses deux extrémités des épaississements (6), comprenant des demi-coques (2) susceptibles d'être pressées contre la circonférence extérieure, qui sont reliées, par l'intermédiaire d'éléments élastiques (3) déformables dans le sens circonférentiel, à au moins deux masses d'inertie (4) réalisées à la manière d'un segment de cercle, les masses d'inertie (4) étant reliées entre elles au moyen d'éléments de retenue, caractérisé en ce que les éléments de retenue sont fixés entre les deux épaississements (6) et arrêtés par au moins une bague (5) enveloppant radialement les faces externes des masses d'inertie (4) et en ce que la bague (5) présente un diamètre intérieur qui est supérieur au diamètre extérieur au moins du plus petit des épaississements (6).

2. Amortisseur de vibration de rotation selon la revendication 1, caractérisé en ce que la bague (5) est revêtue de caoutchouc.

3. Amortisseur de vibration de rotation selon la revendication 1, caractérisé en ce que les masses d'inertie (4) sont pourvues d'un revêtement en caoutchouc (7) et en ce que la bague (5) est pressée sur celui-ci.

4. Amortisseur de vibration de rotation selon la revendication 1, caractérisé en ce qu'au moins deux bagues (5) disposées au niveau des extrémités en bout des masses d'inertie (4) sont prévues.

5. Amortisseur de vibration de rotation selon la revendication 1, caractérisé en ce que la bague (5) présente une forme rectangulaire.

6. Amortisseur de vibration de rotation selon la revendication 1, caractérisé en ce que la bague (5) est réalisée sous forme de masse d'inertie additionnelle.

7. Amortisseur de vibration de rotation selon la revendication 6, caractérisé en ce que la masse d'inertie additionnelle et les masses d'inertie (4) sont reliées par une couche intermédiaire (8) en caoutchouc, de manière à permettre une rotation élastique.

8. Amortisseur de vibration de rotation selon la revendication 1, caractérisé en ce que la bague (5) est limitée sur la face interne par une surface se terminant en direction axiale sous forme de patin.

9. Amortisseur de vibration de rotation selon la revendication 1, caractérisé en ce que la bague (5) est posée par frettage.

10. Amortisseur de vibration de rotation selon la revendication 1, caractérisé en ce que la bague (5) est apte à s'élargir élastiquement dans le sens radial et est pourvue dans le sens radial, à un point de la circonférence, d'une découpure.
